(19) Europäisches Patentamt
European Patent Office
Office européen des brevets

(11) **EP 2 135 846 A2**

(12) **EUROPEAN PATENT APPLICATION**
published in accordance with Art. 153(4) EPC

(43) Date of publication:
**23.12.2009 Bulletin 2009/52**

(51) Int Cl.:
*C02F 1/44* (2006.01)    *B01D 61/06* (2006.01)
*B01D 61/08* (2006.01)    *F04B 43/14* (2006.01)
*C02F 103/08* (2006.01)

(21) Application number: **08779157.0**

(22) Date of filing: **13.05.2008**

(86) International application number:
**PCT/RU2008/000293**

(87) International publication number:
**WO 2008/121030 (09.10.2008 Gazette 2008/41)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.03.2007  RU 2007109399**
**09.08.2007  RU 2007130523**

(71) Applicant: **FOMIN, Vladimir Fjodorovich**
**Volgograd 400123 (RU)**

(72) Inventor: **FOMIN, Vladimir Fjodorovich**
**Volgograd 400123 (RU)**

(74) Representative: **Bucher, Ralf Christian**
**Patentanwalt Dipl.-Ing.**
**Alte Landstrasse 23**
**85521 Ottobrunn (DE)**

(54) **REVERSE OSMOSIS FRESHWATER PLANT (VARIANTS)**

(57)    The invention relates to reverse osmosis plants for desalting seawater. The plant comprises a desalting membrane unit (6), a control unit, and modules that are used for supplying saltwater at a high pressure, each of said modules comprising a diaphragm pump (3), an oil hydraulic drive (7), a device (10) for raising brine pressure, and a brine distributor (8). The internal space of the diaphragm pump is divided by flexible diaphragms into three isolated sections. The central section (A) is designed to be supplied with saltwater and to discharge the same into the desalting membrane unit at a pressure exceeding osmotic pressure. The side section (B) is connected to the oil hydraulic drive (7) for oil to be supplied cyclically at a pressure exceeding osmotic pressure, and the side section (C) is connected to the brine distributor (8) that is connected to the brine outlet (11) of the desalting membrane unit (6). In the plant according to the second variant, the side section (C) of the diaphragm pump comprises an additional diaphragm and a hydraulic multiplier (15) as the brine pressure raising device. The invention helps to improve the reliability of the freshwater plant in operation and to simplify the structural design and use thereof.

Fig. 2

**Description**

**(i) FIELD OF THE INVENTION**

The invention relates to reverse osmosis freshwater plants for purifying and desalting seawater.

**(ii) DESCRIPTION OF THE PRIOR ART**

Water desalting is a method for treating water with the purpose of reducing the concentration of dissolved salts therein to a level (typically, down to 1 g/liter) at which water becomes suitable for drinking and household purposes.

Water can be desalted by either changing the aggregate state of water (distillation or freezing), or without changing its aggregate state (electrodialysis, hyperfiltration or reverse osmosis, ion exchange, water extraction by organic solvents, water extraction in the form of crystal water or crystalline hydrates, heating water to a definite temperature, sorption of ions on porous electrodes, a biological method using the capacity of some algae to absorb salts in the light and release them in the darkness, and so on).

Osmosis is diffusion of a substance through a semipermeable membrane separating a solution and a pure solvent, or two solutions of different concentrations. The semipermeable membrane is a partition that passes small solvent molecules through but is impermeable for larger molecules of the dissolved substance. Concentrations on both sides of such a membrane can only be equalized in the case of one-way diffusion of the solvent. For this reason, osmosis always proceeds from a pure solvent to a solution or from a diluted solution to a concentrated solution.

A solvent flows through the membrane under the effect of osmotic pressure. Osmotic pressure is equal to external overpressure that is to be applied from the solution side to stop osmosis, that is, create osmotic equilibrium conditions. Overpressure exceeding osmotic pressure may reverse osmosis, or initiate reverse diffusion of the solvent.

Osmotic effects are occasionally used in industry, for example, for purifying highly mineralized water by reverse osmosis of liquids.

Membranes are typically made in the form of plates (sheets) or cylindrical cartridges (candles) from microporous inorganic materials and products of animal origin, but most frequently from artificial and synthetic polymers (cellulose esters, polyamides, etc.). The maximum size of particles (molecules) passing through the membrane lies within a few microns to hundredths of a micron. The separating capacity (selectivity) of membranes depends on the structure and physicochemical properties thereof, pressure, temperature, composition of the liquid to be filtered, and other external factors.

A significant number of reverse osmosis plants is used to process brackish water of subsurface sources.

Very large plants are operated to treat significant quantities of effluents. A smaller number of plants are operated to desalt seawater.

A reverse osmosis plant comprises a high-pressure pump (developing 50 to 100 kg/cm$^2$) forcing salty water through flat or tubular membranes, or hollow fiber made of acetyl cellulose or polyamide resins capable of passing water molecules under pressure above osmotic pressure, but unable to pass hydrated ions of salts dissolved in water.

As a rule, plants manufactured by numerous companies differ in the types of modules and the number of units and lines used depending on the required efficiency and output of individual modules. The difference between them lies in their suitability for desalting water of low (up to 1.5%) and high (4.5%) concentrations. Modern plants are designed to operate periodically or continuously. Continuously operating plants are only used in seawater desalting applications. Plant units can be interconnected in sequence or in parallel, or a combined connection can be used. Desalting systems are developed to combine thermal and reverse osmosis components, their combination affecting the final costs of water and costs of the separation process.

A plant using the reverse osmosis principle places high demands on the purity of input water because its impurity causes a rapid deterioration of the permeability and selectivity of the membranes. For this reason, a plant design of this type comprises a large number of devices unrelated to the desalting process. Above all, this applies to purification and filtration elements that are to meet high standards.

A prior art desalting plant uses seawater at a daily capacity of 4,500 m$^3$ (see: V.N. Slesarenko, "Desalination Plants," DVGMA, Vladivostok, 1999, pp. 212-214). Incoming seawater at a salt concentration of 4.5% and temperature of 29°C flows into a first purification unit. A submerged pump placed in a well provided for this purpose pipes the seawater into a settling tank having movable gratings and a device to remove sludge and mud sediments. Following this coarse purification, water is pumped into a water preparation unit where sulfuric acid and coagulants are added to the water through batching devices, and the water flows through coarse purification sand filters. Water is then collected in an accumulator containing pumps to discharge the sediment from the filters and to pump the seawater through cardboard filters. Before it is collected in the accumulator, water is deacidified again. Upon completion of this preparation, high-pressure pumps pipe it into the desalting membrane units designed on a two-stage principle. Four stages reduce the original concentration of seawater by approximately a half, and a pump pipes it through three stages in which its concentration reaches 0.5%. Since the brine leaving these units has a relatively high pressure, its pressure is used to drive a hydraulic turbine that is used to drive the high-pressure pump. Freshwater is delivered by a circulation pump into accumulating pumps, from which it flows to a unit where it is given a drinking quality by decarbonization and chlorination. Water is then limed and collected for long storage.

It follows from the above description that the plant comprises a considerable quantity of water-preparation equipment, as the desired degree of water purification is required to be at least 5 microns.

Desalting membrane units in a majority of reverse osmosis freshwater plants are arranged horizontally because of their specific design. German companies have developed a single-stage plant having vertical desalting membrane units and capable of producing 1,500 $m^3$ of drinking-quality water a day (see: V.N. Slesarenko, "Desalination Plants," DVGMA, Vladivostok, 1999, p. 220).

Different locations and arrangement of units create favorable maintenance service conditions, but a large number of connecting lines is required in case of a large number of units.

Prior art reverse osmosis desalting plants from Aqualyng Company, Norway, are used for desalting seawater or hard water. They include the state-of-the-art RO water desalination plants of very flexible designs (see: The Aqualyng plants at: http:www.lyng. com/lyng/aqua/ defalt.aspx).

A standard plant comprises:

1. Desalting membrane unit;
2. Saltwater delivery tank;
3. Unit of preliminary saltwater purification filters;
4. Recuperator;
5. Booster pumps;
6. High-pressure pumps; and
7. Control unit.

Aqualyng Company can also deliver other equipment of the following types:

- Sand filtration system;
- Additional filtration system;
- Cleaning/cleansing system; and
- Chemical filtration systems.

All these units may be installed each in its own building or on floating platforms.

The following standard module units are suitable for the purposes of this invention:

- 500-700 $m^3$/24 hours;
- 1,000-1,500 $m^3$/24 hours;
- 2,000-2,500 $m^3$/24 hours;
- 4,000-5,000 $m^3$/24 hours; and
- n x 5,000 $m^3$/24 hours.

Combinations of these standard module units can be used to build reverse osmosis plants of any size.

Existing reverse osmosis freshwater plants consisting of saltwater supply pumps, high-pressure multi-piston pumps, desalting membrane units, booster pumps, and recuperators have the following design drawbacks:

1. Low reliability of high-pressure pumps in operation;
2. Fast wear of friction surfaces of a high-pressure pump because of contact with saltwater;
3. High-pressure pumps have a very complicated design for repairs and maintenance services to be carried out; and
4. A high-pressure pump and a recuperator have high costs.

The engineering task of the claimed freshwater plant is improving its reliability in operation, and simplifying its design and operation by replacing high-pressure multi-piston water pumps with a high-pressure diaphragm pump of the claimed design that simultaneously performs the functions of a recuperator. Moreover, the diaphragm pump is free from any rotating and friction components, so its wear resistance and reliability of the plant as a whole in operation are improved.

**(iii)** DESCRIPTION OF THE INVENTION

The above engineering tasks are fulfilled in a reverse osmosis freshwater plant, comprising a desalting membrane unit; at least one module to supply saltwater at a high pressure, said module containing a high-pressure pump, a recuperator, and a device to raise the pressure of brine flowing out of the desalting membrane unit; and also having a control unit, said saltwater supply module, ACCORDING TO THE FIRST VARIANT OF THE INVENTION, further comprising a brine distributor and an oil hydraulic drive, and the high-pressure pump being a diaphragm pump the internal space of which is divided by flexible diaphragms into three isolated sections, the central section being adapted to receive saltwater and discharge it into the desalting membrane unit at a pressure exceeding osmotic pressure; one side section being connected to the oil hydraulic drive for oil to be supplied cyclically at a pressure exceeding osmotic pressure, and the other side section that functions as a recuperator being connected to the brine distributor that is, in its turn, connected through the brine pressure raising device to the brine outlet of the desalting membrane unit.

In a specific example, saltwater may flow into the central section of the diaphragm pump at a pressure of 2.3 to 2.5 kg/cm$^2$; saltwater may flow out of the central section of the diaphragm pump into the desalting membrane unit at a pressure of 59 to 60 kg/cm$^2$; and oil may be supplied cyclically into the side section of the diaphragm pump at a pressure of 59 to 60 kg/cm$^2$.

The reverse osmosis freshwater plant may contain a plurality of modules arranged in parallel to supply saltwater at a high pressure.

The freshwater plant may contain an electronic control unit as a control unit.

The above engineering tasks are also attained in a reverse osmosis freshwater plant comprising a desalting membrane unit; at least one module to supply saltwater at a high pressure, said module having a high-pressure pump, a recuperator, and a device to raise the pressure of the brine flowing out of the desalting membrane unit; said plant further containing a control unit, IN ACCORDANCE WITH THE SECOND VARIANT OF THE INVENTION, said saltwater supply module further having a brine distributor and an oil hydraulic drive, and the high-pressure pump being a diaphragm pump the internal space of which is divided by flexible diaphragms into three isolated sections, the central section being adapted to receive water and to discharge it into the desalting membrane unit at a pressure exceeding osmotic pressure, one side section being connected to the oil hydraulic drive to supply oil cyclically at a pressure exceeding osmotic pressure, and the other side section that functions as a recuperator being connected to the brine distributor and having an additional diaphragm and a multiplier functioning as the brine pressure raising device.

In a specific embodiment of the freshwater plant designed in accordance with the second variant of the invention, saltwater may flow into the central section of the diaphragm pump at a pressure of 2.3 to 2.5 $kg/cm^2$; saltwater may flow out of the central section of the diaphragm pump into the desalting membrane unit at a pressure of 59 to 60 $kg/cm^2$; and oil may be supplied cyclically into the side section of the diaphragm pump at a pressure of 59 to 60 $kg/cm^2$.

In another specific embodiment of the freshwater plant designed according to the second variant of the invention, the central section of the diaphragm pump may be divided by a partition into two parts communicating with one another through passages provided in the partition.

The freshwater plant according to the second variant of the invention may contain several modules arranged in parallel to supply saltwater at a high pressure.

The freshwater plant according to the second variant of the invention may contain an electronic control unit used as the control unit thereof.

**(iv)** DESCRIPTION OF THE DRAWINGS

The idea of the invention is illustrated in the following drawings:

FIG. 1 is a schematic diagram of the claimed reverse osmosis freshwater plant according to Variant 1 (having one module to supply saltwater at a high pressure); and
FIG. 2 is a schematic diagram of the claimed reverse osmosis freshwater plant according to Variant 2 (having one module to supply saltwater at a high pressure).

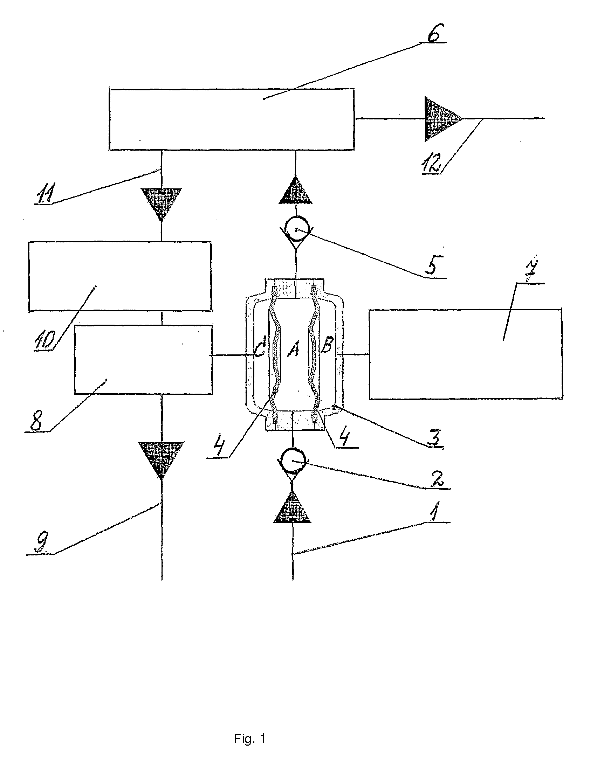

The reverse osmosis freshwater plant according to Variant 1 (FIG. 1) comprises a device to supply saltwater 1 at a pressure of approximately 2.3 to 2.5 $kg/cm^2$, a check valve 2, a diaphragm pump 3 having two flexible diaphragms 4 dividing the internal space of the pump housing into three isolated sections: a central section A and side sections B and C. The central section A is connected at the inlet thereof through check valve 2 to the device supplying saltwater 1, and at the outlet thereof, through a check valve 5 to the inlet of a desalting membrane unit 6. The side section B is connected to an oil hydraulic drive 7 for oil to be supplied cyclically, and the side section C is connected to a brine distributor 8 connected via a booster pump 10 to a brine outlet 11 of desalting membrane unit 6 and having a brine discharge line 9. The booster pump is used as a brine pressure raising device. The plant also comprises a line 12 to discharge fresh water from desalting membrane unit 6 and an electronic control unit (not shown in the drawing).

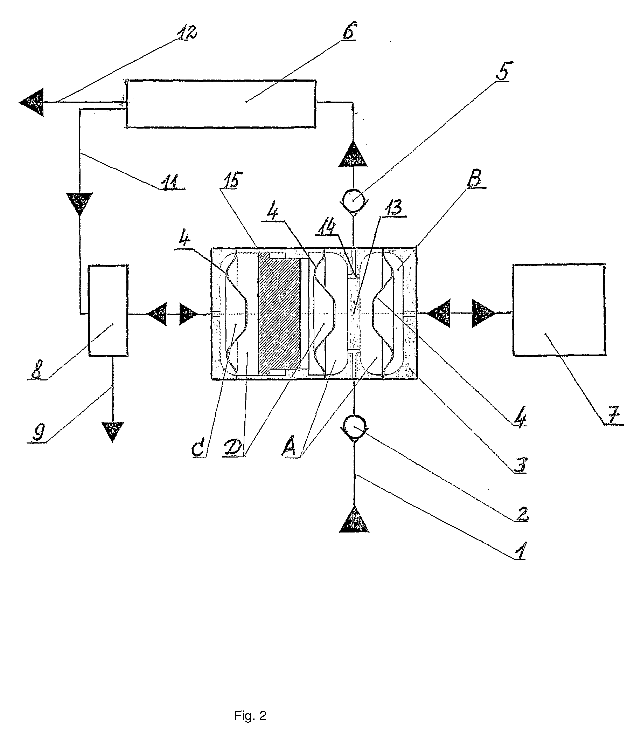

The reverse osmosis freshwater plant according to Variant 2 (FIG. 2) comprises a device supplying saltwater 1, a check valve 2, a diaphragm pump 3 having three flexible diaphragms 4 dividing the internal space of the pump into isolated sections A, B, C, and D. The central section is connected at the inlet thereof through check valve 2 to the device supplying saltwater 1, and at the outlet thereof, through check valve 5 to the inlet of desalting membrane unit 6. The side section B is connected to oil hydraulic drive 7 for oil to be supplied cyclically, and side section C is connected to brine distributor 8 that, in turn, is connected to the brine outlet 11 of desalting membrane unit 6 and has a brine discharge line 9. The central section A is divided by a partition 13 into two parts interconnected by passages 14. Partition 13 serves to prevent extension of the diaphragms at the end of the working cycle. Section D contains the piston of a multiplier 12 between two cavities filled with high-viscosity liquid.

The plant also has a freshwater outlet line 12 leading out of desalting membrane unit 6 and an electronic control unit (not shown in the drawing).

**(v)** PREFERRED EMBODIMENTS OF THE INVENTION

**Example 1**

A freshwater plant according to the first variant of the invention (FIG. 1) comprising a desalting membrane unit, a plurality of modules arranged in parallel to supply saltwater at a high pressure, and an electronic control unit operates as follows:

Saltwater is delivered by a pump at a pressure of 2.3 to 2.5 $kg/cm^2$ to the central section A of diaphragm pump 3 of each module (through a line supplying saltwater 1 and check valve 2). As a result, diaphragms 4 curve outwardly. After the central section A has been filled with saltwater, oil is supplied from oil hydraulic drive 7 at a pressure exceeding osmotic pressure (59 to 60 kg/cm$^2$) to the side section B. At the same time, brine remaining in the freshwater plant from previous cycles is supplied to the side section C, having passed through booster pump 10 and distributor 8. Booster pump 10 raises the pressure of the brine flowing out of desalting membrane unit 6 to the pressure of the oil in section B. The oil and brine pressure in the side sections of the diaphragm pump exceeding osmotic pressure (59 to 60 kg/cm$^2$) causes saltwater to flow from the central section A through check valve 5 to desalting membrane unit 6, out of which fresh water flows along line 12, and brine along line 11. The process is then repeated cyclically. The process is synchronized by the electronic control unit.

**Example 2**

The freshwater plant according to the second variant of the invention (FIG. 2) comprising a desalting membrane unit, a plurality of modules arranged in parallel to supply saltwater at a high pressure, and an electronic control unit operates as follows:

Saltwater is delivered by a pump at a pressure of 2.3 to 2.5 kg/cm$^2$ to the central section A of diaphragm pump 3 of each module (through a line supplying saltwater 1 and check valve 2). Since section A contains partition 13, saltwater flows in through passages 14 in the partition. The two diaphragms 4 of section A curve outwardly as a result. After section A has been filled with saltwater, oil is delivered from oil hydraulic drive 7 at a pressure exceeding osmotic pressure (59 to 60 kg/cm$^2$) into the side cavity B, and the side cavity C is supplied from distributor 8 with brine remaining in the freshwater plant from previous cycles. The brine applies pressure to diaphragm 4, the viscous liquid, and the piston of multiplier 15. The ratio of the squared larger and smaller diameters of the multiplier piston is equal to the ratio of saltwater pressure at the inlet of desalting membrane unit 6 to the brine pressure at the outlet of said unit 6:

$$\frac{D^2}{d^2} = \frac{P_{saltwater}}{P_{brine}} = \frac{60}{57} = 1.053$$

for medium salt content seawater,

wherein:

D is the larger diameter of the multiplier piston;
d is the smaller diameter of the multiplier piston;

P $_{saltwater}$ is the pressure of saltwater applied to the reverse osmosis membranes; and
P $_{brine}$ is the brine pressure applied by the reverse osmosis membranes.

The multiplier piston raises the pressure in section D to between 59 and 60 kg/cm$^2$ conforming to the oil pressure in section B. The oil pressure in the side section B and viscous liquid pressure in section D that both exceed osmotic pressure cause saltwater to flow from section A through check valve 5 to desalting membrane unit 6, with fresh water 12 flowing therefrom. The process is then repeated in cycles. The process is synchronized by the electronic control unit.

The reverse osmosis freshwater plant comprising modules of the claimed design to supply saltwater at a high pressure is, therefore, highly reliable, simple to maintain, and easy to repair. These advantages are derived from the fact that the diaphragm pump used in the plant has no rotary and friction parts. Should a diaphragm break down, it can easily be replaced with a new one. Besides, the design is simplified because the diaphragm pump functions simultaneously as a high-pressure pump and a recuperator. Passing up costly high-pressure piston water pumps helps reduce the manufacturing costs of the freshwater plant.

**Claims**

1.  A reverse osmosis freshwater plant comprising a desalting membrane unit; at least one module to supply saltwater at a high pressure, said module having a high-pressure pump, a recuperator, a device to raise the pressure of brine flowing out of the desalting membrane unit, and a control unit, **wherein** the saltwater supply module further contains a brine distributor and an oil hydraulic drive, the high-pressure pump being designed as a diaphragm pump, the internal space of which is divided by flexible diaphragms into three isolated sections, the central section being adapted to receive salt water and to discharge it into the desalting membrane unit at a pressure exceeding osmotic pressure, one side section being connected to the oil hydraulic drive for oil to be supplied cyclically at a pressure exceeding osmotic pressure, and the other side section that functions as a recuperator being connected to a brine distributor that is, in turn, connected through the brine pressure raising device to the brine outlet of the desalting membrane unit.

2.  The freshwater plant as claimed in claim 1, wherein saltwater flows into the central section of the diaphragm pump at a pressure of 2.3 to 2.5 kg/cm$^2$; the saltwater flows out of the central section of the diaphragm pump into the desalting membrane unit at a pressure of 59 to 60 kg/cm$^2$; and oil is supplied cyclically into a side section of the diaphragm pump at a pressure of 59 to 60 kg/cm$^2$.

3. The freshwater plant as claimed in claim 1, wherein a plurality of modules arranged in parallel is provided therein to supply saltwater at a high pressure.

4. The freshwater plant as claimed in claim 1, or claim 2, or claim 3, wherein an electronic control unit is provided therein.

5. A reverse osmosis freshwater plant comprising a desalting membrane unit; at least one module to supply saltwater at a high pressure, said module containing a high-pressure pump, a recuperator, and a device to raise the pressure of brine flowing out of a desalting membrane unit, and a control unit, **wherein** the saltwater supply module further contains a brine distributor and an oil hydraulic drive, the high-pressure pump being a diaphragm pump having the internal space thereof divided by flexible diaphragms into three isolated sections, the central section being designed to receive saltwater therein and discharge it into the desalting membrane units at a pressure exceeding osmotic pressure; one side section being connected to an oil hydraulic drive for oil to be supplied cyclically at a pressure exceeding osmotic pressure, and the other side section that functions as a recuperator being connected to a brine distributor and having a further diaphragm and a hydraulic multiplier as the brine pressure raising device.

6. The freshwater plant as claimed in claim 5, wherein saltwater flows into the central section of the diaphragm pump at a pressure of 2.3 to 2.5 kg/cm$^2$; saltwater flows out of the central section of the diaphragm pump into the desalting membrane unit at a pressure of 59 to 60 kg/cm$^2$; and oil is supplied into the side section of the diaphragm pump cyclically at a pressure of 59 to 60 kg/cm$^2$.

7. The freshwater plant as claimed in claim 5, wherein the central section of the diaphragm pump is divided by a partition into two parts communicating with one another through passages provided in the partition.

8. The freshwater plant as claimed in claim 5, wherein a plurality of modules arranged in parallel is provided therein to supply saltwater at a high pressure.

9. The freshwater plant as claimed in claim 5, or claim 6, or claim 7, or claim 8, wherein an electronic control unit is provided therein.

EP 2 135 846 A2

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V.N. Slesarenko.** Desalination Plants. *DVGMA,* 1999, 212-214

- **V.N. Slesarenko.** Desalination Plants. *DVGMA,* 1999, 220